# FASCICULE DE BREVET EUROPEEN

(11) **EP 2 648 582 B1**
(45) Date de publication et mention de la délivrance du brevet: **03.08.2016**
(21) Numéro de dépôt: 11805589.6
(22) Date de dépôt: 08.12.2011
(51) Int. Cl.: A47J 37/07

(54) **APPAREIL DE CUISSON DE TYPE GRIL OU BARBECUE**
GRILL- ODER BRATROSTARTIGE KOCHVORRICHTUNG
COOKING APPLIANCE OF THE GRILL OR BARBECUE TYPE

(30) Priorité: 09.12.2010 FR 1060302
(43) Date de publication de la demande: 16.10.2013
(73) Titulaire: Agapea Solutions, 68250 Gundolsheim (FR)
(72) Inventeur: DI MAURO, David, F-68250 Gundolsheim (FR); PARMENTIER, Marc, F-68910 Labaroche (FR)
(74) Mandataire: Gabriel, Franck
(86) Numéro de dépôt international: PCT/IB2011/002970
(87) Numéro de publication internationale: WO 2012/076968

(56) Documents cités:
- DE-U1- 9 112 110
- US-A- 3 195 442
- US-A- 3 389 651
- US-A1- 2003 140 798
- US-A1- 2009 272 278

## Description

### Domaine technique :

La présente invention concerne un appareil de cuisson de type gril ou barbecue, comportant un bâti supportant une surface de cuisson, sur laquelle peuvent être disposés des aliments à cuire, et une surface de chauffe disposée en regard de ladite surface de cuisson, ledit bâti comportant des premiers moyens agencés pour permettre une inclinaison de ladite surface de cuisson par rapport à un plan horizontal P selon un angle α inférieur à 90°, et des seconds moyens agencés pour permettre une inclinaison de ladite surface de chauffe par rapport audit plan horizontal P selon un angle P inférieur à 90°, ladite surface de cuisson étant disposée entre ledit plan horizontal P et ladite surface de chauffe de sorte que les substances libérées par les aliments lors de leur cuisson ne s'écoulent pas sur ladite surface de chauffe.

### Technique antérieure :

Il existe à l'heure actuelle sur le marché de nombreux appareils de cuisson de type barbecue ou gril, à destination du grand public ou voués à un usage professionnel, et dont les différents modèles se distinguent les uns des autres essentiellement par la nature de la source de chaleur utilisée pour cuire les aliments.

Ainsi, si les uns impliquent de griller les aliments au moyen de braises ou de fumées obtenues en brûlant du bois ou du charbon de bois, d'autres reposent sur l'utilisation d'une résistance électrique ou d'un brûleur à gaz.

Quelle que soit la source de chaleur employée, la plupart des barbecues traditionnels sont conçus de manière telle que la surface de cuisson sur laquelle les aliments sont disposés, généralement une grille, une plaque ou une broche, et la surface de chauffe contenant les braises, la résistance électrique ou le brûleur à gaz, sont situées en regard l'une de l'autre dans des plans superposés, ladite surface de cuisson surmontant ladite surface de chauffe.

Ainsi, la publication US 3 389 651, par exemple, décrit un gril alimenté au charbon de bois, comportant une surface de cuisson et une surface de chauffe inclinées de 45° par rapport au sol, et dans lequel la surface de cuisson s'étend au-dessus de la surface de chauffe. Avec une telle configuration dans laquelle la surface de cuisson surmonte la surface de chauffe, au moins une partie des jus de cuisson et des graisses s'écoulant des aliments lors de leur cuisson tombe inévitablement sur la source de chaleur située en contrebas, et est aussitôt carbonisée en générant des fumées toxiques, contenant des composés reconnus comme étant fortement cancérigènes. Ces composés peuvent notamment se révéler particulièrement dangereux dans le cadre d'une utilisation d'un tel appareil de cuisson dans un environnement clos, tel qu'un appartement. Par ailleurs, l'appareil de cuisson décrit dans la publication US 3 389 651 peut se révéler dangereux, et notamment déclencher un incendie du fait de la nature du combustible utilisé, ou provoquer des brûlures car aucune protection thermique pour l'utilisateur n'est prévue. Cet appareil de cuisson requiert par conséquent une vigilance sans failles de la part de l'utilisateur. De plus, un tel appareil voit son efficacité limitée par le fait que la cuisson des aliments s'effectue par rayonnement à travers des tôles perforées, et non pas directement.

L'on connaît également d'autres solutions, développées en vue d'éviter tout contact entre les substances s'écoulant des aliments et ladite surface de chauffe, pour limiter l'émission de fumées toxiques et incommodantes.

L'une d'entre elles, bien connue par l'homme du métier et décrite notamment dans le document FR 2 851 445, repose sur la mise en oeuvre d'une cuisson verticale au moyen de surfaces de cuisson et de chauffe placées l'une en face de l'autre dans des plans verticaux.

Néanmoins, bien qu'elle permette de réduire la quantité de fumées toxiques dues à la carbonisation des graisses, cette solution ne donne toujours pas entière satisfaction.

En effet, il a pu être observé que les graisses s'écoulant des aliments placés en partie haute de la surface de cuisson dégoulinent le long des aliments placés à des niveaux inférieurs, allant parfois jusqu'à provoquer leur inflammation. En outre, bien que dans une moindre mesure, les graisses arrivent toujours par projection au contact de la surface de chauffe en produisant des odeurs et autres vapeurs désagréables. Un tel appareil de cuisson n'est donc pas davantage adapté à une cuisson saine dans un environnement intérieur.

Une autre alternative, connue du document FR 2 527 919, est définie par un barbecue électrique dans lequel lesdites surfaces de cuisson et de chauffe sont également disposées en regard l'une de l'autre dans des plans horizontaux, mais où cependant c'est ladite surface de chauffe qui est située au-dessus de ladite surface de cuisson. Là encore, le problème des fumées toxiques n'est pas entièrement résolu, puisque les graisses arrivent toujours par projection au contact de la résistance électrique où elles sont carbonisées en émettant des fumées et des odeurs indésirables.

Une autre solution, décrite dans la publication DE 91 12 110 concerne un barbecue alimenté au charbon de bois. Il comporte un bac à braises dont la paroi frontale, équipée de fentes, définit une surface de chauffe inclinée d'un angle fermé par rapport à l'horizontale. Le bac à braises est supporté par un bâti comportant des moyens de réception d'une grille de cuisson destinée à être placée en regard de la paroi frontale du bac à braises dans un plan incliné parallèle à celui de ladite paroi frontale. Le bac à braise est mobile en translation horizontale par rapport à la grille de cuisson dont il peut être rapproché ou écarté en vue de moduler la puissance de cuisson. Le barbecue comporte également une surface de récupération des graisses s'écoulant des aliments lors de leur cuisson. Bien que permettant de limiter l'émission de fumées toxiques et incommodantes, un tel barbecue présente néanmoins plusieurs inconvénients tels que la pollution des aliments par les produits de la combustion à savoir les braises et les cendres. En effet, il ne supprime ni les risques de brûlures pour l'utilisateur ni les risques d'incendie dus à l'utilisation de braises, ce qui limite en outre sa mise en oeuvre à un environnement extérieur et interdit toute utilisation en appartement. D'autre part, il présente un encombrement important qui implique de disposer d'un espace de stockage volumineux et rend par ailleurs son transport difficile.

D'autre part, à l'instar des différents dispositifs précédemment évoqués, les appareils de cuisson de type gril ou barbecue classiques ne donnent pas satisfaction du point de vue des sources de chaleur couramment mises en oeuvre.

En effet, le bois présente non seulement une certaine inertie mais peut également être dangereux. En outre, de nombreux appareils de cuisson de type gril ou barbecue classiques fonctionnent selon un mode du « tout ou rien », et ne permettent aucun réglage de la température de cuisson. Par conséquent, les aliments doivent être constamment surveillés en cours de cuisson puis éloignés de la surface de chauffe dès l'obtention du degré de cuisson souhaité, offrant peu de souplesse et peu de possibilité de maintien au chaud des aliments après leur cuisson.

### Exposé de l'invention:

La présente invention vise à pallier ces inconvénients en proposant un appareil de cuisson de type barbecue permettant de réaliser une cuisson saine, de griller les aliments sans générer de fumées cancérigènes incommodantes, tout en alliant efficacité et souplesse de cuisson. Un autre but de l'invention est également de proposer un appareil de cuisson de conception simple, utilisant peu de pièces, qui soit à la fois léger et compact, et présentant un encombrement réduit aussi bien lors, qu'en dehors de son utilisation. L'invention a également pour but de proposer un appareil de cuisson d'entretien simplifié, agencé pour permettre une manipulation de la surface de cuisson sans nécessiter de protection thermique, et permettant par conséquent de cuisiner en toute sécurité en supprimant tout risque de brûlures, tout en créant deux types de cuisson différents.

A cet effet, la présente invention a pour objet un appareil de cuisson défini par la revendication indépendante 1, caractérisé en ce que la surface de chauffe comporte sur une de ses faces au moins un premier générateur de chaleur défini par un tube à rayonnement infrarouge et sur l'autre de ses faces au moins un second générateur de chaleur différent dudit premier générateur de chaleur pour créer deux types de cuisson différents. Un appareil correspondant au préambule de la revendication indépendante 1 est décrit dans le document US 2009/272278 A1.

Conformément à une variante de réalisation préférentielle, lesdits premiers moyens comportent au moins un cran ménagé dans ledit logement et agencé pour accueillir au moins une partie d'un bord de ladite surface de cuisson, l'axe dudit cran étant incliné selon ledit angle α par rapport audit plan horizontal P.

Selon une autre caractéristique avantageuse, ladite crémaillère comporte une pluralité de crans d'axe incliné selon ledit angle α par rapport audit plan horizontal prévue sur une crémaillère solidaire du logement et permettant un réglage de la distance séparant ladite surface de cuisson de ladite surface de chauffe dans sa position d'utilisation. La présente invention prévoit par ailleurs que ledit logement comporte un fond amovible permettant une récupération des substances évacuées par les aliments au cours de leur cuisson. Dans ce cas, ledit fond et ledit logement peuvent être assemblés au moyen d'une liaison tiroir.

Avantageusement, lesdits seconds moyens agencés pour permettre une inclinaison selon un angle β inférieur à 90° de ladite surface de chauffe par rapport audit plan horizontal comportent en outre des moyens de blocage en position, tels que par exemple un poussoir à billes.

Selon une caractéristique additionnelle de la présente invention, ladite surface de cuisson est amovible et réversible de manière à permettre l'orientation successive de chacune de ses faces en regard de ladite surface de chauffe.

Conformément à une variante de réalisation préférentielle, ladite surface de cuisson comporte une grille formée de parois auto-serrantes délimitant entre elles au moins un espace où disposer les aliments à cuire. Ce dernier peut avantageusement comporter des compartiments de dimensions différentes pouvant accueillir différentes catégories d'aliments.

Conformément à une autre variante de réalisation préférentielle, ladite surface de chauffe comporte au moins un tube à rayonnement infrarouge relié à une source d'alimentation en énergie, choisie parmi le gaz, l'électricité, ou un fluide inflammable.

En outre, ledit tube à rayonnement infrarouge est de préférence disposé entre une face métallique agencée pour réfléchir la chaleur qu'il diffuse en direction de la surface de cuisson et une face vitrée disposée en regard de la surface de cuisson, perméable aux rayonnements infrarouge et agencée pour le protéger de tous contacts mécaniques accidentels avec les aliments ou les projections éventuelles de substances évacuées par les aliments au cours de leur cuisson.

Selon une caractéristique additionnelle, ledit tube à rayonnement infrarouge est relié à des moyens de régulation de sa puissance permettant un ajustement de la température diffusée vers lesdits aliments.

Le second générateur de chaleur peut comporter au moins une bobine à induction.

Par ailleurs, l'appareil de cuisson selon la présente invention peut encore comporter des moyens de sécurité agencés pour empêcher son fonctionnement lorsque l'une au moins desdites surface de cuisson ou surface de chauffe n'est pas positionnée dans ladite inclinaison selon ledit angle α ou selon ledit angle β. Conformément à une variante de réalisation, lesdits moyens de sécurité peuvent comporter un connecteur disposé sur le flanc de ladite surface de chauffe de manière telle que ledit connecteur est uniquement accessible dans la position active de ladite surface de chauffe.

Conformément à une variante de réalisation additionnelle, l'appareil de cuisson selon l'invention se caractérise encore en ce que ledit bâti comporte des moyens agencés pour permettre son encastrement dans un plan de travail.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels:
- la figure 1 est une vue en perspective d'une première variante de réalisation d'un appareil de cuisson selon l'invention,
- la figure 2 est une vue en coupe de l'appareil de cuisson de la figure 1,
- la figure 3 est une vue agrandie du détail D de la figure 2,
- la figure 4 est une vue en perspective de l'appareil de cuisson de la figure 1 dans laquelle la surface de chauffe est rabattue dans sa position passive et le fond du logement est en cours d'extraction,
- la figure 5 est une vue en perspective de l'appareil de cuisson de la figure 1 en position fermée de rangement,
- la figure 6 est une vue en perspective d'une deuxième variante de réalisation d'un appareil de cuisson selon l'invention encastré dans un plan de travail et dans laquelle la surface de chauffe est rabattue dans sa position passive,
- la figure 7 est une vue en perspective de l'appareil de cuisson de la figure 6 en position fermée de rangement et présentant une surface de chauffe additionnelle, et
- la figure 8 est une vue en perspective de l'appareil de cuisson de la figure 6 en position fermée de rangement et recouvert par un cache constituant une surface de travail.

### Illustration de l'invention et meilleure manière de la réaliser :

En référence aux figures, l'invention concerne un appareil de cuisson 1, la permettant de griller des aliments placés sur une surface de cuisson, telle qu'une grille de cuisson 2 en métal, au moyen d'une surface de chauffe 3 disposée en regard de ladite grille 2.

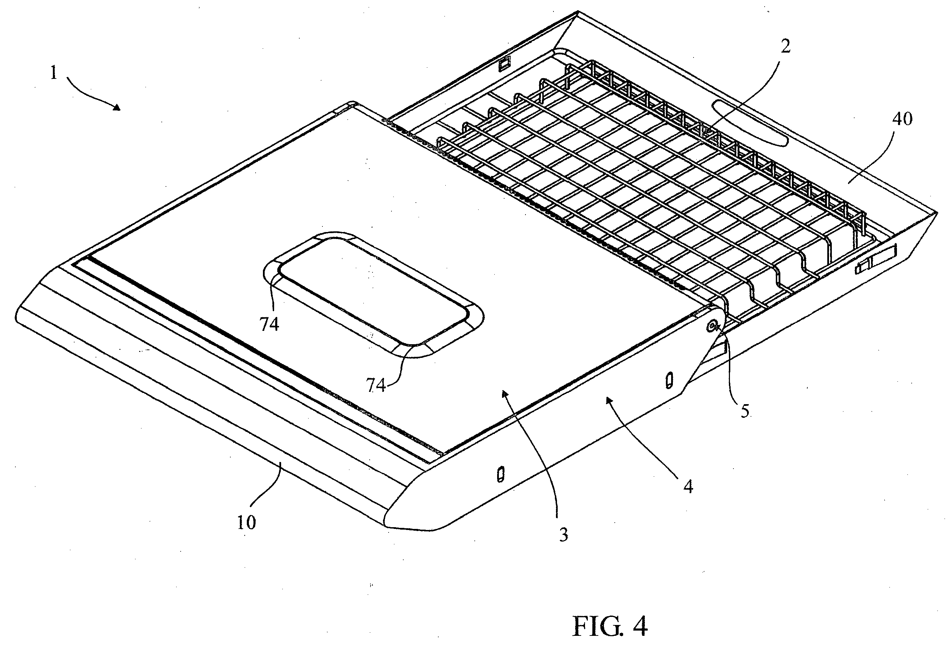

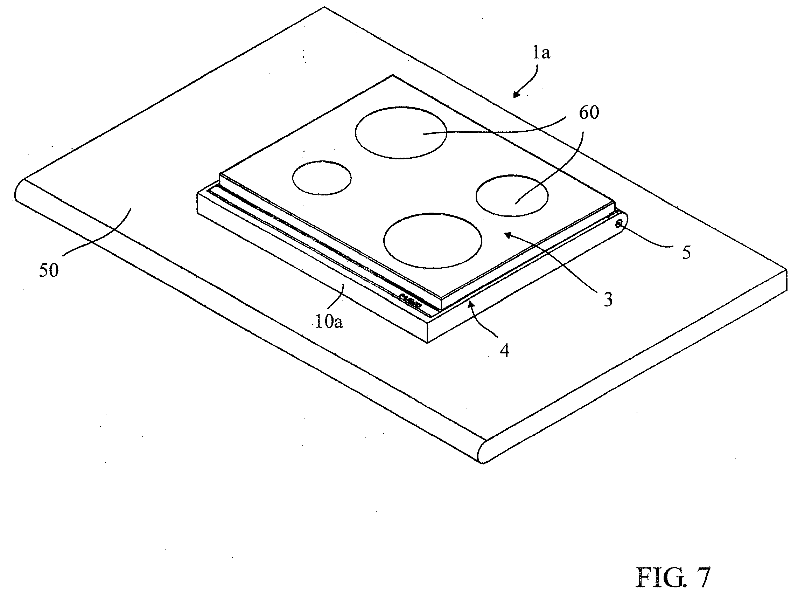

Dans les variantes de réalisation illustrées par les différentes figures, l'appareil de cuisson 1, 1a comporte un logement 4 défini par un bâti 10, 10a de forme sensiblement parallélépipédique auquel la surface de chauffe 3 est reliée au moyen d'une articulation 5. La surface de chauffe 3 est liée à un couvercle 30 et peut donc être déplacée entre une position rabattue passive dans laquelle le logement 4 est fermé (cf. fig. 4, 5 et 7) et une position active dans laquelle le logement 4 est ouvert et ladite surface de chauffe 3 est inclinée d'un angle β, inférieur à 90° et compris par exemple entre 45° et 85° et de préférence égal à 70°, par rapport au plan horizontal P formé par le fond 40 du logement 4. L'articulation 5 est par ailleurs préférentiellement couplée à des moyens de blocage en position, tels que par exemple un poussoir à billes (non représenté) garantissant le maintien de la surface de chauffe 3 dans sa position inclinée active. Ce poussoir à billes peut définir plusieurs positions inclinées au moyen de crans successifs séparés d'un pas fixe ou non dans lesquels se loge la bille de blocage sollicitée par un ressort de rappel. Bien entendu, tout autre moyen de blocage en position peut convenir.

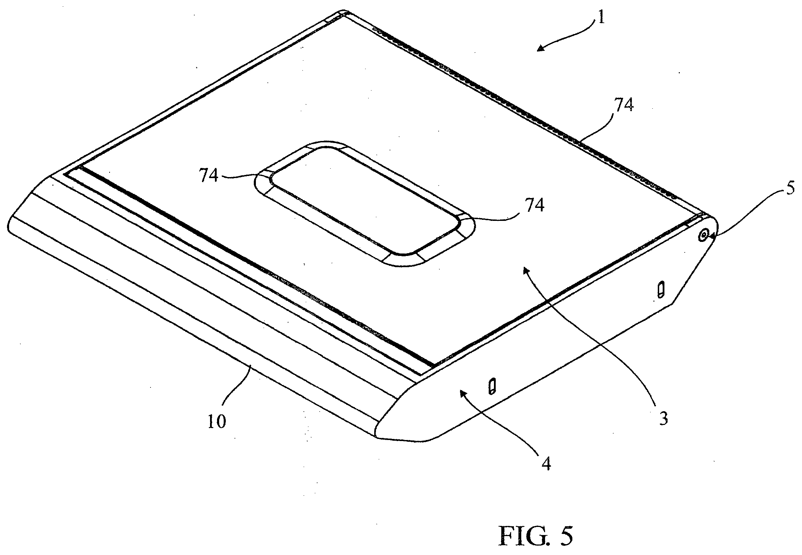

Dans les variantes de réalisation illustrées, le logement 4 présente en outre une forme et des dimensions telles que dans sa position fermée il peut contenir à la fois la grille de cuisson 2 et le câble 70 disposés dans le logement 4 et la surface de chauffe 3 liée au couvercle 30 qui ferme le bâti 10, 10a, donnant lieu à un appareil de cuisson compact, très peu encombrant et pouvant être rangé dans un espace de taille réduite (cf. fig. 5). Le design du bâti 10, 10a peut être soigné pour offrir un produit aussi bien fonctionnel qu'esthétique.

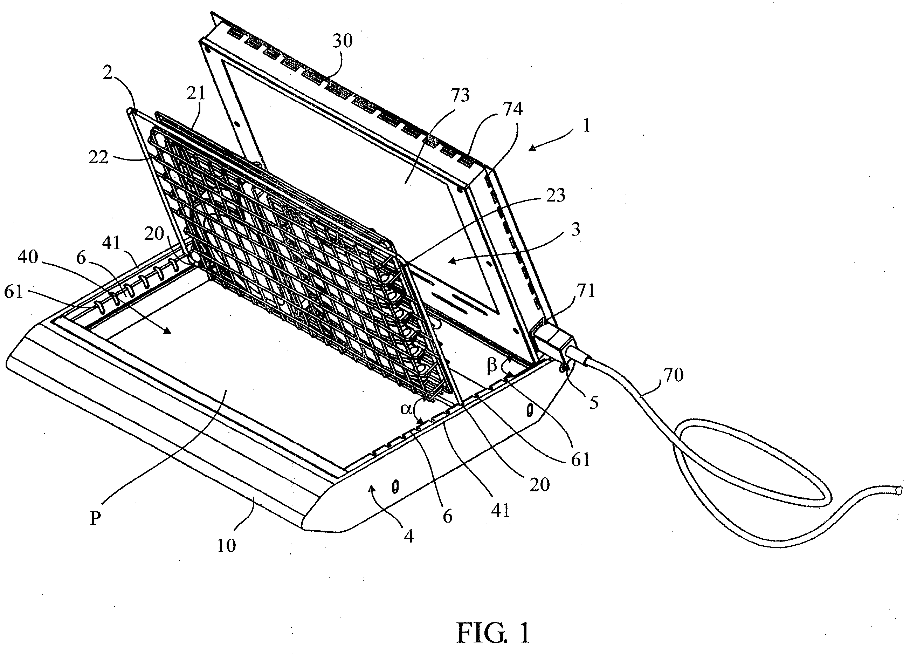

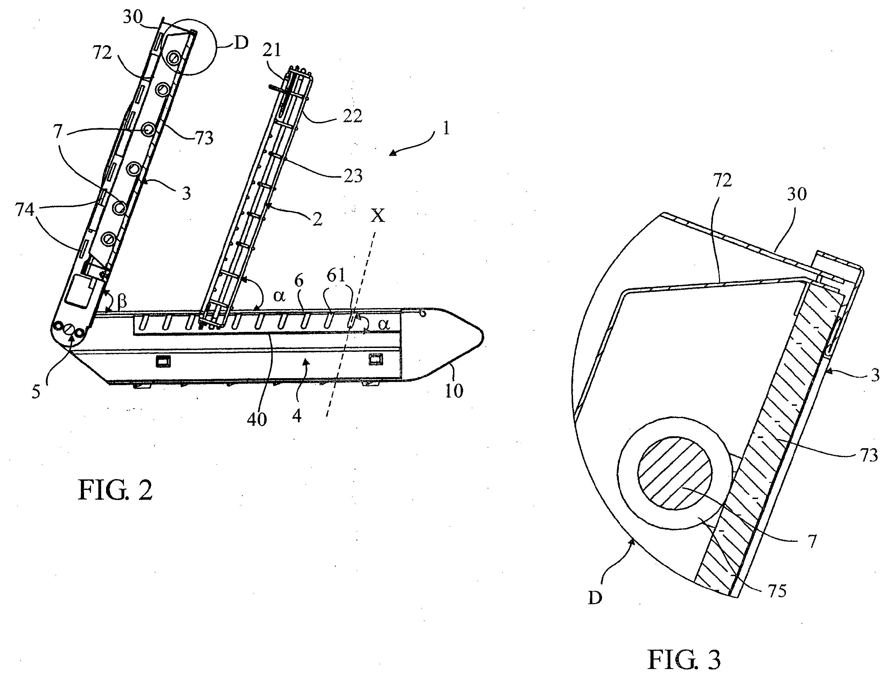

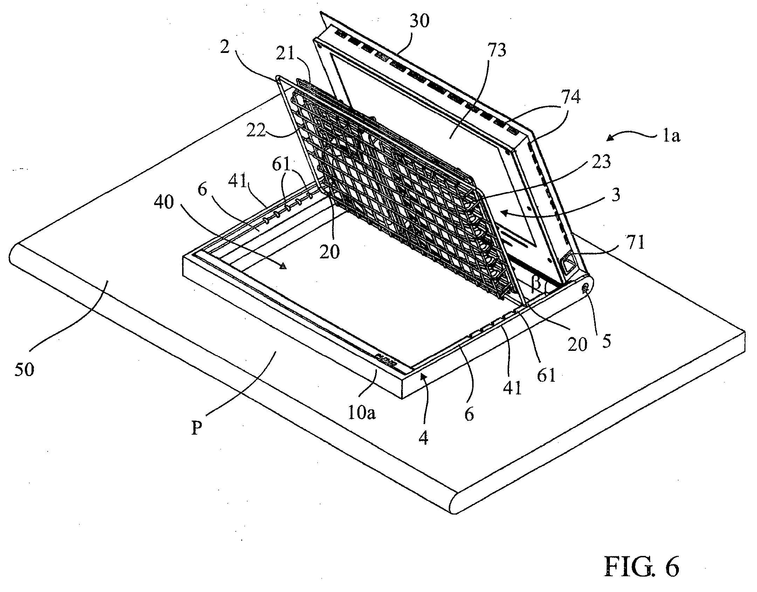

Tel que visible aux figures 1 et 6, le logement 4 comporte deux crémaillères 6 identiques munies d'une rangée de crans 61, réalisées par usinage, emboutissage, ou rapportées sur chacune des faces internes de ses bords latéraux 41. Chaque cran 61 d'une crémaillère 6 est aligné avec un cran 61 de l'autre crémaillère 6, le long d'une droite parallèle à l'axe de l'articulation 5, formant ainsi une pluralité de paires de crans 61 placées à des distances croissantes par rapport à l'axe de l'articulation 5, pouvant être séparées d'un pas fixe ou non. Toujours en référence aux figures 1 et 6, lesdites paires de crans 61 sont agencées pour accueillir deux coins consécutifs 20 d'une grille de cuisson 2, avantageusement prévue amovible et interchangeable. En référence à la figure 2, l'axe X de chaque cran 6 est incliné selon un angle α inférieur à 90° et compris par exemple entre 45° et 85° et de préférence environ égal à 70° par rapport au plan horizontal formé par le fond 40 du logement 4, de sorte que lorsque la grille 2 est engagée dans une paire de crans 61, elle est elle-même avantageusement inclinée selon ledit angle α par rapport audit plan horizontal P. Les angles α et β sont de préférence égaux de sorte que la surface de cuisson 3 et la grille 2 sont parallèles. Bien entendu ces angles peuvent ne pas être égaux selon le résultat de cuisson recherché, grâce notamment au fait que la surface de chauffe 3 est mobile en rotation autour de son articulation 5.

Du fait que la grille 2 est inclinée et située en dessous de la surface de chauffe 3, à savoir entre la surface de chauffe 3 et le fond 40 du logement 4, les jus, graisses et autres substances évacuées par les aliments lors de leur cuisson s'écoulent directement en direction dudit fond 40 faisant office de lèchefrite, évitant leur éventuelle carbonisation au contact de la surface de chauffe 3 ou leur concentration sur d'autres aliments situés en contrebas. La cuisson réalisée est par conséquent très saine, sans aucune émission de fumées, et pratiquement inodore. Dans les variantes de réalisation illustrées, le fond 40 est, de surcroit, amovible et est assemblé audit logement 4 de préférence au moyen d'une liaison tiroir permettant son extraction en vue de son nettoyage (cf. fig. 4).

Par ailleurs, la grille 2 peut être écartée ou rapprochée de la surface de chauffe 3 par son engagement, selon le cas, dans une paire de crans 61 plus éloignée ou plus proche de l'axe de l'articulation 5 reliant ladite surface de chauffe 3 audit logement 4. Ceci permet de moduler la température de cuisson des aliments indépendamment de la puissance de la source d'énergie alimentant la surface de chauffe 3.

Tel que visible aux figures 1 et 6, la grille de cuisson 2 est de préférence formée de parois auto-serrantes 21, 22, qui peuvent être symétriques ou non par rapport au plan médian de ladite grille de cuisson 2, et qui délimitent entre elles un espace où disposer les aliments à cuire. Ledit espace peut avantageusement être compartimenté, par exemple au moyen d'alvéoles 23 de dimensions différentes spécifiquement prévues pour disposer des aliments d'épaisseur différentes de manière à éviter leur glissement par gravité vers le fond 40 du logement 4 lorsque la grille de cuisson 2 est dans sa position inclinée. Le caractère amovible et réversible de ladite grille de cuisson 2 permet en outre l'orientation successive de chacune de ses parois 21, 22 en regard de ladite surface de chauffe 3 et par conséquent une cuisson homogène des deux faces des aliments. La grille de cuisson 2 est avantageusement réalisée en un matériau pas ou faiblement conducteur de chaleur, tel que par exemple de l'acier inoxydable, de sorte à permettre sa manipulation à main nues, sans protection thermique, y compris en cours de cuisson des aliments, par exemple pour la retourner et diriger chaque face des aliments vers la surface de chauffe 3 et obtenir une cuisson parfaitement homogène, ce qui est particulièrement avantageux en termes de sécurité pour les personnes.

Conformément à l'invention et tel que visible à la figure 2, la surface de chauffe 3 comporte plusieurs tubes à rayonnement infrarouge 7 alimentés en électricité au moyen d'un câble 70 amovible branché sur une prise de courant électrique et relié à un connecteur 71 situé sur un flanc de la surface de chauffe 3. L'accès à ce connecteur 71 est par conséquent libéré lorsque la surface de chauffe 3 est dans sa position active inclinée, et condamné lorsque l'appareil de cuisson 1, la est rangé, ce qui constitue une sécurité de fonctionnement. Une telle surface de chauffe équipée de tubes à rayonnement infrarouge 7 permet avantageusement une montée en température rapide, et à titre d'exemple de l'ordre de 300°C en moins de 10 minutes. Pendant les périodes d'inutilisation de l'appareil de cuisson 1, 1a, le câble 70 peut avantageusement être retiré du connecteur 71 et rangé à l'intérieur du logement 4. Les tubes à rayonnement infrarouge 7 pourraient également être alimentés avec du gaz ou un fluide inflammable, tel que par exemple de l'éthanol. Dans ce dernier cas, l'appareil de cuisson 1, 1a est totalement autonome en énergie. Bien entendu tout autre générateur de chaleur peut être utilisé, tel que des résistances électriques.

En référence aux figures 2 et 3, les tubes à rayonnement infrarouge 7 sont disposés parallèlement entre eux, entre une face métallique 72, par exemple en acier inoxydable ou similaire, liée au couvercle 30, et une face vitrée 73. Chaque tube à rayonnement infrarouge 7 est monté dans une borne de raccordement 75 (cf. fig. 3) et est par conséquent amovible afin d'autoriser son remplacement, le cas échéant. Les bornes de raccordement 75 sont situées dans le côté du couvercle 30 contenant le connecteur 71 et sont raccordées électriquement à ce dernier dans une goulotte thermiquement isolée (non visible). La face métallique 72 est agencée pour réfléchir la chaleur que les tubes à rayonnement infrarouge 7 diffusent en direction de la grille de cuisson 2 tandis que la face vitrée 73 perméable aux rayons infrarouges et disposée en regard de la grille de cuisson 2, est agencée pour protéger les tubes à rayonnement infrarouge 7 de tous contacts mécaniques accidentels avec les aliments ou les projections éventuelles des substances évacuées par les aliments au cours de leur cuisson. Selon une forme de réalisation préférentielle, le couvercle 30 comporte plusieurs orifices 74 pouvant être répartis latéralement et/ou à la base et/ou à l'arrière de la surface de chauffe 3 (cf. fig. 1, 2, 4) permettant une circulation d'air autour des tubes à rayonnement infrarouge 7 et évitant une augmentation intempestive de la température entre la face vitrée 73 et la face métallique 72. Bien entendu, les tubes représentés peuvent être remplacés par un tube unique configuré en serpentin pour couvrir la surface de chauffe.

D'autre part, selon une caractéristique additionnelle de l'invention, l'appareil de cuisson 1, 1a peut être équipé de moyens de régulation (non représentés) de la puissance desdits tubes à rayonnement infrarouge 7, permettant un ajustement de la température diffusée en direction desdits aliments. Ces moyens de régulation peuvent être avantageusement pilotés au moyen d'un bouton de commande situé sur ledit appareil de cuisson 1, 1a et/ou d'une télécommande. L'appareil de cuisson 1, la selon l'invention peut également être équipé de moyens de sécurité, tels que des capteurs de présence ou similaires, agencés pour empêcher son fonctionnement lorsque l'une au moins de ladite grille de cuisson 2 ou de ladite surface de chauffe 3 n'est pas positionnée dans ladite inclinaison selon ledit angle α ou selon ledit angle β.

Il peut également être complété par des accessoires de cuisson, tels que des grilles complémentaires de forme et de dimensions différentes, un tournebroche porté par une structure conçue pour se loger dans les crans 61 et couplé à un petit moteur équipé de sa propre alimentation électrique, la broche pouvant être également remplacée par un tambour de cuisson permettant la cuisson directe, ou dans un contenant, de plats complets comprenant des légumes en plus de la viande ou du poisson.

### Possibilités d'application industrielle :

Il ressort clairement de cette description que l'invention permet d'atteindre les buts fixés, à savoir proposer un appareil de cuisson 1, 1a permettant de griller des aliments de manière saine, en évitant tout dégagement de fumées toxiques, au moyen d'une source de chaleur puissante, mobile et modulable, cet appareil étant particulièrement compact, offrant une très grande sécurité fonctionnelle et interdisant tout risque de brûlures.

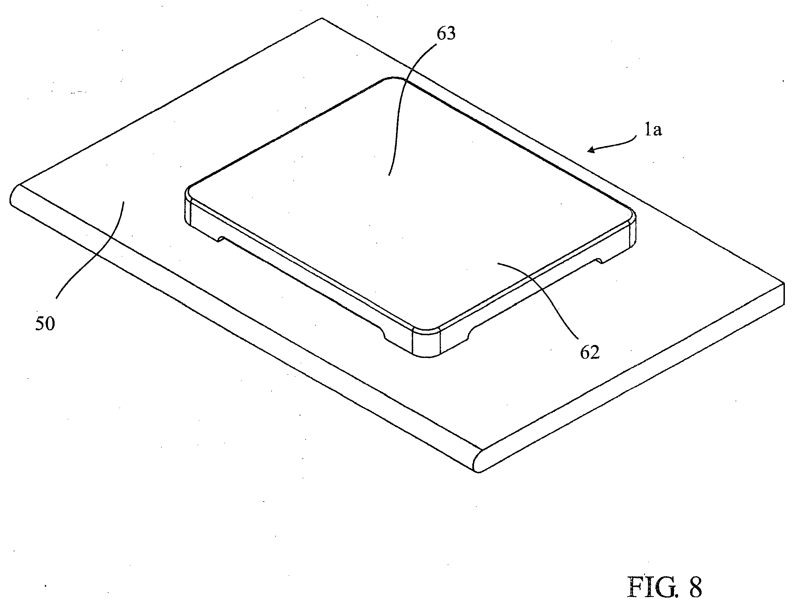

Un tel appareil de cuisson 1, 1a est ainsi parfaitement adapté pour un usage par le grand public, dans un environnement extérieur aussi bien qu'intérieur. Il peut en outre être développé en vue d'une utilisation à titre professionnel. Dans ce cas, il pourrait par exemple, comme illustré aux figures 6 à 8, être intégré à un plan de travail 50 ou à un piano de cuisson. Tel qu'illustré à la figure 8, l'appareil de cuisson 1a pourrait avantageusement être accessoirisé par un cache 62 constituant une surface de travail 63 et agencé pour recouvrir ledit appareil de cuisson lorsqu'il n'est pas en service, de sorte à optimiser la surface que ledit appareil de cuisson occupe sur ledit plan de travail 50. Il est également équipé d'une surface de chauffe 3 supplémentaire et comporter sur une de ses faces au moins un tube à rayonnement infrarouge 7 pour griller les aliments et sur sa face opposée au moins une bobine à induction 60 permettant de cuire des aliments lorsque la surface de chauffe 3 est placée dans sa position passive et que l'émetteur à rayonnement infrarouge 7 est situé dans le logement 4.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Appareil de cuisson (1, 1a) de type gril ou barbecue, comportant un bâti (10, 10a) supportant une surface de cuisson (2), sur laquelle peuvent être disposés des aliments à cuire, et une surface de chauffe (3) disposée en regard de ladite surface de cuisson (2), ledit bâti (10, 10a) comportant des premiers moyens agencés pour permettre une inclinaison de ladite surface de cuisson (2) par rapport à un plan horizontal (P) selon un angle α inférieur à 90°, et des seconds moyens agencés pour permettre une inclinaison de ladite surface de chauffe (3) par rapport audit plan horizontal (P) selon un angle β inférieur à 90°, ladite surface de cuisson (2) étant disposée en-dessous de ladite surface de chauffe (3) de sorte que les substances libérées par les aliments lors de leur cuisson ne s'écoulent pas sur ladite surface de chauffe (3), ledit bâti (10, 10a) définit un logement (4) dont le fond (40) forme ledit plan horizontal (P) et agencé pour accueillir ladite surface de cuisson (2) entre une position de rangement dans laquelle elle repose au fond du logement (4) et une position d'utilisation dans laquelle elle est inclinée dudit angleα par rapport audit plan horizontal (P), **caractérisé en ce que** lesdits seconds moyens comportent une articulation (5) reliant ladite surface de chauffe (3) audit bâti (10, 10a) et permettant le déplacement de ladite surface de chauffe (3) entre une position passive dans laquelle elle ferme ledit logement (4) et une position active dans laquelle elle ouvre ledit logement (4), est inclinée dudit angle P par rapport audit plan horizontal (P) et permet de déployer et positionner ladite surface de cuisson (2) en regard de ladite surface de chauffe (3) et **en ce que** ladite surface de chauffe (3) comporte sur une de ses faces au moins un premier générateur de chaleur défini par un tube à rayonnement infrarouge (7) et sur l'autre de ses faces au moins un second générateur de chaleur différent dudit premier générateur de chaleur pour créer deux types de cuisson différents.

2. Appareil de cuisson (1, 1a) selon la revendication 1, **caractérisé en ce que** lesdits premiers moyens comportent au moins un cran (61) ménagé dans ledit logement (4) et agencé pour accueillir au moins une partie d'un bord de ladite surface de cuisson (2), l'axe (X) dudit cran (61) étant incliné selon ledit angle α par rapport audit plan horizontal (P).

3. Appareil de cuisson (1, 1a) selon la revendication 2, **caractérisé en ce qu'**il comporte une pluralité de crans (61) d'axe (X) incliné selon ledit angle α par rapport audit plan horizontal (P) prévue sur une crémaillère (6) solidaire dudit logement (4) et permettant un réglage de la distance séparant ladite surface de cuisson (2) de ladite surface de chauffe (3) dans sa position d'utilisation.

4. Appareil de cuisson (1, 1a) selon la revendication 1, **caractérisé en ce que** ledit logement (4) comporte un fond amovible (40) permettant une récupération des substances évacuées par les aliments au cours de leur cuisson.

5. Appareil de cuisson (1, 1a) selon la revendication 1, **caractérisé en ce que** lesdits seconds moyens agencés pour permettre une inclinaison selon un angleβ inférieur à 90° de ladite surface de chauffe par rapport audit plan horizontal (P) comportent des moyens de blocage en position.

6. Appareil de cuisson (1, 1a) selon la revendication 1, **caractérisé en ce que** ladite surface de cuisson (2) est amovible et réversible de manière à permettre l'orientation successive de chacune de ses faces en regard de ladite surface de chauffe (3).

7. Appareil de cuisson (1, 1a) selon la revendication 6, **caractérisé en ce que** ladite surface de cuisson (2) comporte une grille de cuisson (2) formée de parois auto-serrantes (21, 22) délimitant entre elles au moins un espace où disposer les aliments à cuire.

8. Appareil de cuisson (1, 1a) selon la revendication 7, **caractérisé en ce que** ledit espace comporte des compartiments de dimensions différentes pouvant accueillir différentes catégorises d'aliments.

9. Appareil de cuisson (1, 1a) selon la revendication 1, **caractérisé en ce que** ladite surface de chauffe (3) comporte au moins un tube à rayonnement infrarouge (7) relié à une source d'alimentation en énergie, choisie parmi le gaz, l'électricité, un fluide inflammable.

10. Appareil de cuisson (1, 1a) selon la revendication 9, **caractérisé en ce que** ledit tube à rayonnement infrarouge (7) est disposé entre une face métallique (72) agencée pour réfléchir la chaleur qu'il diffuse en direction de la surface de cuisson (2) et une face vitrée (73) disposée en regard de la surface de cuisson (2), perméable aux rayonnements infrarouge et agencée pour le protéger de tous contacts mécaniques accidentels avec les aliments ou de projections éventuelles de substances évacuées par les aliments au cours de leur cuisson.

11. Appareil de cuisson (1, 1a) selon la revendication 9, **caractérisé en ce que** ledit tube à rayonnement infrarouge (7) est relié à des moyens de régulation de sa puissance permettant un ajustement de la température diffusée vers lesdits aliments.

12. Appareil de cuisson (1a) selon la revendication 1, **caractérisé en ce que** ledit second générateur de chaleur comporte au moins une bobine à induction (60).

13. Appareil de cuisson (1, 1a) selon la revendication 9, **caractérisé en ce qu'**il comporte un connecteur (71) agencé pour relier à une source d'alimentation en énergie ledit au moins un tube à rayonnement infrarouge (7) et disposé sur le flanc de ladite surface de chauffe (3) de manière telle que ledit connecteur (71) est uniquement accessible dans la position active de ladite surface de chauffe (3).

14. Appareil de cuisson (1, 1a) selon la revendication 1, **caractérisé en ce que** ledit bâti (10, 10a) comporte des moyens agencés pour permettre son encastrement dans un plan de travail (50).

15. Appareil de cuisson (1, 1a) selon la revendication 14, **caractérisé en ce qu'**il comporte un cache (62) constituant une surface de travail (63) et agencé pour recouvrir ledit appareil de cuisson (1, 1a) lors des périodes d'inutilisation dudit appareil de cuisson (1, 1a).

## Patentansprüche

1. Grill- oder bratrostartige Zubereitungsvorrichtung (1, 1a) mit einem Tragrahmen (10, 10a), der eine Zubereitungsfläche (2) trägt, an der zuzubereitende Lebensmittel anordenbar sind, und mit einer Heizfläche (3), die der Zubereitungsfläche (2) gegenüberliegend angeordnet ist, wobei der Tragrahmen (10, 10a) über erste Mittel, die dazu eingerichtet sind, der Zubereitungsfläche (2) in Bezug auf eine Horizontalebene (P) eine Neigung von einem Winkel α von weniger als 90° zu verleihen, und über zweite Mittel verfügt, die dazu eingerichtet sind, der Heizfläche (3) in Bezug auf die Horizontalebene (P) eine Neigung von einem Winkel β von weniger als 90° zu verleihen, wobei die Zubereitungsfläche (2) derart unterhalb der Heizfläche (3) angeordnet ist, dass von den Lebensmitteln während des Zubereitens freigesetzte Substanzen nicht auf die Heizfläche (3) laufen, wobei der Tragrahmen (10, 10a) eine Aufnahme (4) umfasst, deren Boden (40) die Horizontalebene (P) bildet und die dazu eingerichtet ist, die Zubereitungsfläche (2) entweder in einer Verstaustellung, in der sie auf dem Boden der Aufnahmekammer (4) ruht, oder in einer Gebrauchsstellung aufzunehmen, in der sie unter dem Winkel α in Bezug auf die Horizontalebene (P) geneigt ist, **dadurch gekennzeichnet, dass** die zweiten Mittel ein Gelenk (5) aufweisen, das die Heizfläche (3) mit dem Tragrahmen (10, 10a) verbindet sowie das Bewegen der Heizfläche (3) zwischen einer Passivstellung, in der sie die Aufnahme (4) verschließt, und einer Aktivstellung gestattet, in der sie die Aufnahme (4) öffnet, unter dem Winkel β in Bezug auf die Horizontalebene (P) geneigt ist und das Ausfahren sowie Anordnen der Zubereitungsfläche (2) in Bezug auf die Heizfläche (3) gestattet, und dass die Heizfläche (3) an einer ihrer Seiten über eine erste Wärmequelle verfügt, die durch eine Infrarotstrahlungsröhre (7) gebildet ist, und an der anderen Seite mit einer zweiten Wärmequelle ausgestattet ist, die von der ersten Wärmequelle verschieden ist, um zwei Arten von Zubereitungen bereitzustellen.

2. Zubereitungsvorrichtung (1, 1a) nach Anspruch 1, **dadurch gekennzeichnet, dass** die ersten Mittel wenigstens eine Ausnehmung (61) aufweisen, die in der Aufnahme (4) ausgebildet und zur Aufnahme wenigstens eines Teils eines Randes der Zubereitungsfläche (2) eingerichtet ist, wobei die Achse (X) der Ausnehmung (61) mit dem Winkel α in Bezug auf die Horizontalebene (P) geneigt ist.

3. Zubereitungsvorrichtung (1, 1a) nach Anspruch 2, **dadurch gekennzeichnet, dass** eine Anzahl von Ausnehmungen (61) mit einer mit dem Winkel α in Bezug auf die Horizontalebene (P) geneigten Achse (X) ausgebildet sind, die an einer Rastschiene (6) vorhanden sind, die mit der Aufnahme (4) einstückig ist und ein Einstellen des Abstands zwischen der Zubereitungsfläche (2) und der Heizfläche (3) in deren Gebrauchsstellung gestattet.

4. Zubereitungsvorrichtung (1, 1a) nach Anspruch 1, **dadurch gekennzeichnet, dass** die Aufnahme (4) einen abnehmbaren Boden (40) aufweist, was eine Entnahme von von den Lebensmitteln während deren Zubereitung entwichenen Substanzen gestattet.

5. Zubereitungsvorrichtung (1, 1a) nach Anspruch 1, **dadurch gekennzeichnet, dass** die eine Neigung der Heizfläche mit einem Winkel β kleiner als 90° in Bezug auf die Horizontalebene (P) gestattenden und eingerichteten zweiten Mittel Positionierblockiermittel aufweisen.

6. Zubereitungsvorrichtung (1, 1a) nach Anspruch 1, **dadurch gekennzeichnet, dass** die Zubereitungsfläche (2) demontierbar und derart umdrehbar ist, dass eine aufeinanderfolgende Ausrichtung jeder ihrer Seiten in Bezug auf die Heizfläche (3) geschaffen ist.

7. Zubereitungsvorrichtung (1, 1a) nach Anspruch 6, **dadurch gekennzeichnet, dass** die Zubereitungsfläche (2) über ein Zubereitungsgitter (2) verfügt, das mit selbstklemmenden Wänden (21, 22) ausgebildet ist, die zwischen ihnen wenigstens einen Raum begrenzen, in dem die zuzubereitenden Lebensmittel angeordnet sind.

8. Zubereitungsvorrichtung (1, 1a) nach Anspruch 7, **dadurch gekennzeichnet, dass** der Raum Unterteilungen verschiedener Größe aufweist, um verschiedene Arten von Lebensmitteln aufzunehmen.

9. Zubereitungsvorrichtung (1, 1a) nach Anspruch 1, **dadurch gekennzeichnet, dass** die Heizfläche (3) wenigstens eine Infrarotstrahlungsröhre (7) aufweist, die mit einer aus Gas, Strom oder einer brennbaren Flüssigkeit ausgewählten Energielieferquelle verbunden ist.

10. Zubereitungsvorrichtung (1, 1a) nach Anspruch 9, **dadurch gekennzeichnet, dass** die Infrarotstrahlungsröhre (7) zwischen einer Metallfläche (72), die dazu eingerichtet ist, die von ihr abgegebene Wärme in Richtung der Zubereitungsfläche (2) zu lenken, und einer Glasfläche (73) angeordnet ist, die der Zubereitungsfläche (2) gegenüberliegend angeordnet, für Infrarotstrahlung durchlässig und dazu vorgesehen ist, diese von jedem unbeabsichtigten mechanischen Kontakt mit den Lebensmitteln oder möglichen Auswürfen von von den Lebensmitteln während deren Zubereitung abgegebenen Substanzen zu schützen.

11. Zubereitungsvorrichtung (1, 1a) nach Anspruch 9, **dadurch gekennzeichnet, dass** die Infrarotstrahlungsröhre (7) mit Einstellmitteln für deren Leistung gekoppelt ist, die ein Einstellen der in Richtung der Lebensmittel abgegebenen, temperaturbestimmenden Wärme gestatten.

12. Zubereitungsvorrichtung (1a) nach Anspruch 1, **dadurch gekennzeichnet, dass** die zweite Wärmequelle wenigstens eine Induktionsspule (60) aufweist.

13. Zubereitungsvorrichtung (1, 1a) nach Anspruch 9, **dadurch gekennzeichnet, dass** ein Verbindungsmittel (71) vorhanden ist, das dazu eingerichtet ist, eine Energieversorgungsquelle mit wenigstens einer Infrarotstrahlungsröhre (7) zu verbinden und die an der Seite der Heizfläche (3) derart angeordnet ist, dass das Verbindungsmittel (71) nur in der Aktivstellung der Heizfläche (3) zugänglich ist.

14. Zubereitungsvorrichtung (1, 1a) nach Anspruch 1, **dadurch gekennzeichnet, dass** der Tragrahmen (10, 10a) Mittel aufweist, die dazu eingerichtet sind, den Einbau in eine Arbeitsfläche (50) zu gestatten.

15. Zubereitungsvorrichtung (1, 1a) nach Anspruch 14, **dadurch gekennzeichnet, dass** sie über eine Abdeckung (62) verfügt, die eine Arbeitsfläche (63) bildet, und dazu eingerichtet ist, die Zubereitungsvorrichtung (1, 1a) während Zeiträumen einer Nichtbenutzung der Zubereitungsvorrichtung (1, 1a) zu bedecken.

## Claims

1. Cooking appliance (1, 1a) of the grill or barbecue type, comprising a frame (10, 10a) supporting a cooking surface (2), on which foodstuffs to be cooked can be arranged, and a heating surface (3) arranged opposite said cooking surface (2), said frame (10, 10a) comprising first means designed to allow inclination of said cooking surface (2) with respect to a horizontal plane (P) at an angle α less than 90°, and second means designed to allow inclination of said heating surface (3) with respect to said horizontal plane (P) at an angle β less than 90°, said cooking surface (2) being arranged below said heating surface (3) so that the substances released by the foodstuffs while they cook do not run onto said heating surface (3), said frame (10, 10a) defines a housing (4) whose bottom (40) forms said horizontal plane (P) and designed to accommodate said cooking surface (2) between a storage position in which it lies on the bottom of the housing (4) and a use position in which it is inclined at said angle α to said horizontal plane (P), **characterized in that** said second means comprise a hinge (5) connecting said heating surface (3) to said frame (10, 10a) and allowing the displacement of said heating surface (3) between a passive position in which it closes said housing (4) and an active position in which it opens said housing (4), is inclined at said angle β to said horizontal plane (P), and can be used to deploy and position said cooking surface (2) opposite said heating surface (3), and **in that** said heating surface (3) comprises on one of its sides at least one first heat generator defined by an infrared radiation tube (7) and on the other side thereof at least one second heat generator different from said first heat generator to create two different types of cooking.

2. Cooking appliance (1, 1a) according to claim 1, **characterised in that** said first means comprise at least one notch (61) formed in said housing (4) and designed to accommodate at least a portion of an edge of said cooking surface (2), the axis (X) of said notch (61) being inclined at said angle α to said horizontal plane (P).

3. Cooking appliance (1, 1a) according to claim 2, **characterised in that** it comprises a plurality of notches (61) whose axes (X) are inclined at said angle α to said horizontal plane (P) planned on a rack (6) fastened to said housing (4) and allowing adjustment of the distance between said cooking surface (2) and said heating surface (3) in its use position.

4. Cooking appliance (1, 1a) according to claim 1, **characterised in that** said housing (4) comprises a removable bottom (40) to catch the substances released from the foodstuffs while they cook.

5. Cooking appliance (1, 1a) according to claim 1, **characterised in that** said second means designed to allow inclination at an angle β less than 90° of said heating surface to said horizontal plane (P) comprise means for locking in position.

6. Cooking appliance (1, 1a) according to claim 1, **characterised in that** said cooking surface (2) is removable and reversible so that each side can be directed successively towards said heating surface (3).

7. Cooking appliance (1, 1a) according to claim 6, **characterised in that** said cooking surface (2) comprises a cooking grill (2) formed from self-tightening sides (21, 22) defining between them at least one space where the foodstuffs to be cooked can be placed.

8. Cooking appliance (1, 1a) according to claim 7, **characterised in that** said space comprises compartments of various sizes in order to accommodate different types of foodstuff.

9. Cooking appliance (1, 1a) according to claim 1, **characterised in that** said heating surface (3) comprises at least one infrared radiation tube (7) connected to a power source selected from gas, electricity or a flammable fluid.

10. Cooking appliance (1, 1a) according to claim 9, **characterised in that** said infrared radiation tube (7) is arranged between a metal side (72) designed to reflect the heat that it diffuses towards the cooking surface (2) and a glazed side (73) arranged opposite the cooking surface (2), permeable to the infrared radiation and designed to protect it from any accidental mechanical contact with the foodstuffs or possible splashes of substances released from the foodstuffs while they cook.

11. Cooking appliance (1, 1a) according to claim 9, **characterised in that** said infrared radiation tube (7) is connected to means for regulating its power in order to adjust the heat diffused to said foodstuffs.

12. Cooking appliance (1a) according to claim 1, **characterised in that** said second heat generator comprises at least one induction coil (60).

13. Cooking appliance (1, 1a) according to claim 9, **characterised in that** it comprises a connector (71) designed to connect said at least one infrared radiation tube (7) to a power source and arranged on the side of said heating surface (3) such that said connector (71) is only accessible when said heating surface (3) is in the active position.

14. Cooking appliance (1, 1a) according to claim 1, **characterised in that** said frame (10, 10a) comprises means designed to allow its installation in a work top (50).

15. Cooking appliance (1, 1a) according to claim 14, **characterised in that** it comprises a cover (62) forming a work surface (63) and designed to cover said cooking appliance (1, 1a) when said cooking appliance (1, 1a) is not in use.
